# EUROPEAN PATENT APPLICATION

(11) **EP 2 413 100 A1**
(43) Date of publication of application: **01.02.2012**
(21) Application number: 10755879.3
(22) Date of filing: 11.03.2010
(51) Int. Cl.: G01C 21/00, G08B 21/18

(54) **VEHICLE-MOUNTED ELECTRONIC DEVICE**

(30) Priority: 25.03.2009 JP 2009073937; 25.03.2009 JP 2009073936
(71) Applicant: Sanyo Electric Co., Ltd., Osaka 570-8677 (JP); Sanyo Consumer Electronics Co., Ltd., Tottori-shi Tottori 680-8634 (JP)
(72) Inventor: WATANABE Ryo, Tottori-Shi Tottori 680-8634 (JP)
(74) Representative: Glawe, Delfs, Moll
(86) International application number: PCT/JP2010/054089
(87) International publication number: WO 2010/110079

(57) **Abstract**

Disclosed is a vchicle-mounted electronic device provided with an input unit which designates a destination, an incident-prone area storage unit in which incident-prone area data is stored, a report unit, and a control unit, wherein incident occurrence rates in a plurality of time zones in each of areas or incident occurrence rates in a plurality of time zones in each of facilities within each of the areas are stored in the incident-prone area storage unit, and the control unit calculates the predicted time of arrival at the designated destination. and when detecting that the incident occurrence rate in the area in which the destination is located or the incident occurrence rate in the destination is a preset predetermined value or more in a time zone of a predetermined time period later than the calculated predicted time, causes the report unit to make a report.

## Description

### Technical Field

The present invention relates to a vehicle-mounted electronic device and particularly to a vehicle-mounted electronic device that, based on pre-stored incident-prone area data or user-set incident-prone area data, a destination that has been set, and so on, warns the user to watch out if the destination is located within an incident-prone area.

In this application, an "incident" refers to any unfavorable event that might occur in relation to vehicles, examples of which include theft of a vehicle itself, theft from a vehicle of in-vehicle equipment or goods loaded on the vehicle (a so-called vehicle break-in), tampering such as cutting a tire or scratching away paint, natural disasters such as flooding and a landslide caused by a downpour, and others.

### Background Art

Nowadays, various types of electronic devices such as navigation apparatuses, music players, DVD players, television receivers ready for analog and digital broadcasts are made compact and are offered as portable or vchicle-mountable devices.

Some of such vehicle-mounted electronic devices, for example, navigation apparatuses, are, when used, fitted to the dashboard of a vehicle.

Today, there are even offered electronic devices that are both vehicle-mountable and portable by being provided with a built-in power supply, a portion for connection to an AC power supply, or the like so that, when removed from a vehicle, they can be carried around for use as portable devices or at home. Vehicle-mounted electronic devices of this type are relatively easy to remove from the dashboard and are therefore prone to theft.

Various proposals have been made to deal with situations where such vehicle-mounted electronic devices face the danger of being stolen.

For examples, Patent Document 1 (JP-A-2004-355241) listed below discloses an invention related to a vehicle comnmmcation ECU and a method of monitoring it against theft.

The technique disclosed in Patent Document 1 relates to an apparatus that allows a vehicle-mounted devices to communicate with the outside via a wireless device. In the apparatus, a sensor is provided that detects the fitted state of the vehicle-mounted device to a vehicle so as to perform monitoring against abnormal removal such as in theft. Based on an output as a result of the detection from the sensor, the apparatus notifies a control center of theft via the wireless device. At the same time, the wireless devices is locked so that it becomes unusable.

Furthermore, Patent Document 2 (JP-B-35565125) discloses an apparatus that warns of an accident-prone road section when there is one in a predetermined range in the direction in which a vehicle, of interest is traveling.

According to the technique disclosed in Patent Document 2, road sections that were prone to accidents in the past are pre-stored as accident-prone road sections information in which accident-prone road sections are, in a form organized one by one, represented by latitudes and longitudes of their end points and of their midway points such as crossroads; it is judged whether or not at least two of the end and midway points of an accident-prone road section are included in a predetermined range in the direction in which a vehicle of interest is traveling, and if it is judged that at least two such points are included, a warning is issued of the vehicle's approach to the accident-prone road sections.

### List of Citations

### Patent Literature

Patent Document 1: JP-A-2004-355241 (paragraphs [0018]-[0020] and paragraphs [0029]-[0037]).
Patent Document 2: JP-B-3565125 (paragraphs [0012] and [0014] and paragraphs [0016]-[0025]).

### Summary of Invention

### Technical Problem

With the vehicle-mounted electronic device disclosed in Patent Document 1 mentioned above, however, the sensor is provided that detects the fitted state of the vehicle-mounted electronic device to a vehicle, the sensor detects abnormal removal in theft, and an output as a result of the detection is delivered to the external control center via the wireless device, which leads to the following problems. That is, in order for the occurrence of theft detected of the vehicle-mounted electronic device to be perceived, it is necessary that the sensor be provided separately from the main body of the vehicle-mounted electronic device, resulting in increased cost. Furthermore, since it is necessary to communicate with the external control center, if, for example, a communication failure occurs, the occurrence of theft detected cannot be perceived.

Furthermore, with the apparatus disclosed in Patent Document 2 mentioned above, which warns of an accident-prone road section, it is judged whether or not at leat two of the end and midway points of an accident-prone road section are included in a predetermined range in the direction in which a vehicle of interest is traveling, and if it is judged that at least two such points are included, a warning is issued of the vehicle's approach to the accident-prone road section. Even if, however, while the vehicle of interest is being driven, a then-prone road section is found present in a predetermined range in the direction in which the vehicle is traveling, no particular problem is raised as long as the vehicle simply travels across that road section. It is when the driver stops the vehicle and leaves it that the driver should watch out for theft most closely. That is, a warning of theft is needed not while the vehicle is traveling but at the time it is stopped. According to Patent Document 2, however, there is provided no portion for judging that the vehicle of interest is stopped, which leads to a problem that a warning cannot be issued when the vehicle is stopped in a theft-prone area.

In order to solve the above-described problems, through various studies, the inventors of this application have invented a vehicle-mounted electronic device that is provided with a current location detection function for detecting a current location of a vehicle, data on theft-prone areas, an area discrimination function for discriminating the current location of the vehicle, a vehicle state detecting function for detecting that the vehicle is stopped, and a warning function, and thus, upon detecting that the vehicle is stopped within a theft-prone area, can issue a warning to watch out for theft without especially requiring communication with the outside. This invention has been filed under Japanese Patent Application No. 2007-283500.

When an actual use situation of this vehicle-mounted electronic device is assumed, however, it is found that the following several problems are yet to be solved.

For one thing, with respect to an incident that might occur in one particular facility, the probability of occurrence of the incident and degree of danger thereof may vary depending on a time slot, and it is therefore desirable to determine whether or not a warning should be given depending on a time slot. Furthermore, even If the probability of occurrence of the incident and degree of danger thereof are low at the time of arrival at a destination, after a lapse of a predetermined length of time from the arrival (for example, in the midst of shopping in a store), the occurrence rate and degree of danger of the incident may increase, and it is therefore desirable to determine whether or not a warning should be given also assuming such a case. Moreover, it is desirable to determine whether or not a warning should be given in consideration also of whether or not a stay in the facility as the designated destination may possibly be a prolonged.

In view of the above-described problems, it is an object of the present invention to provide a vehicle-mounted electronic device that is highly effective from a practical viewpoint.

### Solution to the Problem

In order to achieve the above-described object, the present invention provides a vehicle-mounted electronic device comprising: an input portion for designating a destination; an incident-prone area storage portion in which incident-prone area data is stored; an indication portion; and a control portion. In the vehicle-mounted electronic device, the incident-prone area storage portion stores an incident occurrence rate in each area in each of a plurality of time slots or the incident occurrence rate in each facility within each area in each of the plurality of time slots; the control portion calculates a predicted time of arrival at the destination designated, and upon detecting that, in a time slot after a lapse of a predetermined length of time from the calculated predicted time, the incident occurrence rate in an area in which the destination is located or the incident occurrence rate at the destination is not less than a preset predetermined value, the control portion makes the indication portion provide an indication.

According to this configuration, a warning can be indicated in consideration also of the incident occurrence rate after a lapse of a predetermined length of time from a predicted arrival time.

Furthermore, the above-described configuration may be as follows. That is, if the control portion detects that the incident occurrence rate in the area in which the destination is located or the incident occurrence rate at the destination is not less than the predetermined value, and if a stay in a facility as the destination is predicted to be prolonged, the control portion makes the indication portion provide an indication.

According to this configuration, a warning can be indicated in consideration also of the incident occurrence rate after a lapse of a predetermined length of time from a predicted arrival time and of characteristics of a designated facility.

Furthermore, the above-described configuration may be as follows. That is, if the incident occurrence rate at the destination is not less than the predetermined value, the control portion searches for, as an alternative destination, a facility of the same type in the vicinity of the designated destination, which has a value of the incident occurrence rate in the time slot less than the predetermined value.

According to this configuration, if there is a safer facility of the same type in the neighborhood of a destination, it is possible to lead the user to such a facility.

Furthermore, this configuration, may be as follows, that is, if an appropriate facility as the alternative destination, is found, the control portion makes the indication portion provide guidance to the alternative destination, and if an appropriate, facility as the alternative destination is not found, the control portion makes the indication portion indicate a warning to watch out.

According to this configuration, if an alternative destination is found, guidance to the alternative destination can be provided, and if the alternative destination is not found, a warning that a designated destination is an incident-prone facility can be indicated.

Furthermore, in the above-described configuration, the preset predetermined value may be made changeable to an arbitrary value via the input portion.

According to this configuration, the range of the incident occurrence rate at which a warning should be indicated can be easily changed depending on the user's preferences or circumstances at different times. For example, if a warning is indicated too often and thus is perceived to be annoying, through changing the predetermined value to a higher value, the frequency at which the warning is indicated can be decreased.

### Advantageous Effects of the Invention

The vehicle-mounted electronic device of the present invention makes it possible to indicate a warning in consideration also of the incident occurrence rate after a lapse of a predetermined length of time from a predicted arrival time and thus is highly effective from a practical viewpoint.

### Brief Description of Drawings

[Fig. 1] is a block diagram showing a main portion of a navigation apparatus of the present invention.
[Fig. 2] is a diagram showing a then-prone area on a map.
[Fig. 3] is a diagram showing theft-prone area data.
[Fig. 4A] is a diagram showing an example in which data on theft-prone areas is stored in administrative units.
[Fig. 4B] is a diagram showing an example in which data on how the occurrence rate of theft in a facility varies depending on a time slot is stored.
[Fig. 4C] is a diagram showing one example of appropriate warning messages prepared so as to be suitable for types of incidents, respectively.
[Fig. 5] is a flow chart showing a control operation of a control portion 10 in a navigation apparatus of a first working example of the present invention.
[Fig. 6A] is a flow chart showing a control operation of a control portion 10 in a navigation apparatus of a second working example of the present invention.
[Fig. 6B] is a flow chart showing another embodiment of the control operation of the control portion 10 in the navigation apparatus of the second working example of the present invention.
[Fig. 7] is a flow chart showing a control operation of a control portion 10 in a navigation apparatus of a third working example of the present invention.
[Fig. 8] is a flow chart showing a control operation of a control portion 10 in a navigation apparatus of a fourth working example of the present invention.

### Description of Embodiments

Hereinafter, specific examples of the present invention will be described in detail by way of working examples with reference to the appended drawings. The working examples described below, however, are illustrative of a vehicle-mounted navigation apparatus for embodying the technical ideas of the present invention and are not intended to define the present invention as being directed to this vehicle-mounted navigation apparatus. The present invention is also adaptable equally to vehicle-mounted electronic devices and the like according to other embodiments encompassed by the claims, which do not have a navigation function of the vehicle-mounted navigation apparatus exemplarily used in this working example.

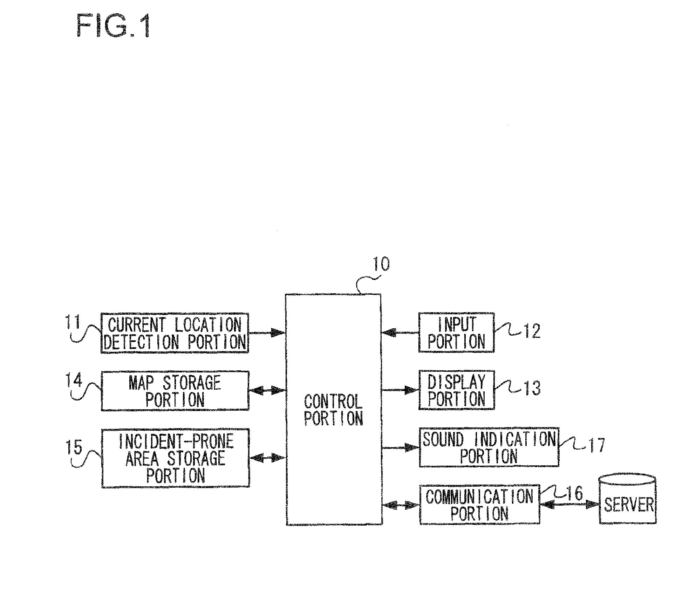

Fig. 1 is a block diagram showing a configuration of a main portion of the vehicle-mounted navigation apparatus according to the present invention.

A control portion 10 is constituted of a processor composed of a CPU (not shown) and a RAM/ROM (not shown) and controls operations of various parts of the vehicle-mounted navigation apparatus in accordance with a control program recorded in the RAM and ROM.

A current location detection portion 11 is constituted of a GPS receiver or the like that receives radio waves containing time information from a plurality of GPS satellites orbiting above the earth.

Moreover, as the current location detection portion 11, an autonomous navigation portion composed of a distance sensor, an azimuth sensor, a rudder angle sensor, and so on can also be used.

An input portion 12 is constituted of various types of keys, switches, or the like via which an operational instruction and departure and destination locations are inputted to the vehicle-mounted navigation apparatus.

A display portion 13 display a map image and a guided route image for viewing by the user and is constituted of a liquid crystal display or the like.

The display portion 13 may include a touch sensor so that it functions as an input portion, in which case the user touches any of icons displayed on a screen to input his/her selection.

A map storage portion 14 stores a plurality of rectangular blocks of mesh data obtained by division at predetermined longitudes and latitudes and road data including road node data and road link data. The road node data is data of nodes that are junction points such as crossroads and branch points of roads, and the road link data is data of links that are paths connecting between the nodes. The road node data contains road node numbers, location coordinates, the numbers of connected links, names of crossroads, and so on, and as the road node data, guide points corresponding to guided locations such as crossroads, and guide data for providing guidance on a right turn, a left turn, straight travel, and so on are also stored.

Furthermore, the road link data contains road node numbers of a start point and an end point, road types, link lengths (link costs), required lengths of time, the numbers of lanes, road widths, and so on. As link attributes, data on bridges, tunnels, railroad crossings, tollbooths, and so on is further imparted to the road link data. The road types refer to information distinguishing between expressways and toll roads, national roads and prefectural roads, and so on.

The map storage portion 14 further stores background data composed of water system data such as the shapes of coastlines, lakes and marshes, and rivers, administrative boundary data, and facility data containing locations, shapes, and names of facilities.

An incident-prone area storage portion 15 pre-stores data on areas prone to various types of incidents likely to occur when a vehicle is parked or stopped in those areas. Examples of such areas include areas prone to theft of a vehicle or a vehicle-mounted navigation apparatus, areas prone to tampering with a tire or paint on a vehicle body, and areas prone to flooding caused by a typhoon or a downpour.

A communication portion 16 is capable of connecting to, for example, a server of a nearest police headquarters in order to obtain updated incident-prone area information and is therefore used for updating of the incident-prone area storage portion 15. Furthermore, the incident-prone area information can also be inputted by the user himself/herself via the input portion 12.

A sound indication portion 17 provides various types of sound indications in the vehicle-mounted navigation apparatus, such as guidance provided during route guiding, and is constituted of a speaker or the like.

Next, the following describes incident-prone area data, taking theft-prone area data as an example.

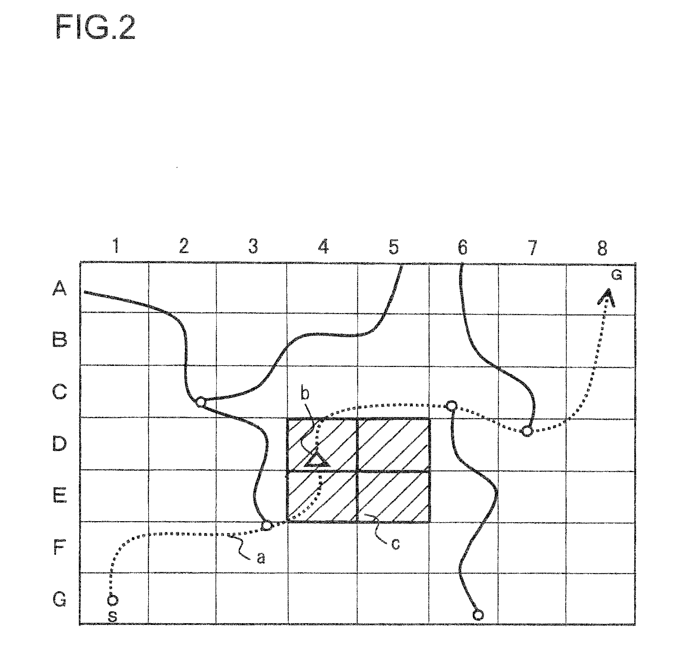

Fig. 2 is a diagram showing a theft-prone area on map data stored in the map storage portion 14.

In Fig. 2, (a) indicates a guided route, (b) indicates a current location of a vehicle, and (c) indicates the theft-prone area.

Furthermore, as shown in Fig. 2, the map data stored in the map storage portion 14 is composed of a plurality of rectangular blocks of mesh data obtained by dividing the entire map at predetermined longitudes and latitudes, and each of the blocks of mesh data obtained by the division contains road node data, road link data, and so on.

Furthermore, in this working example, each of the blocks of mesh data can be identified by an alphabetical character combined with a numeral, and in Fig. 2, the theft-prone area corresponds to blocks of mesh data (D4), (D5), (E4) and (E5) enclosed by thick lines.

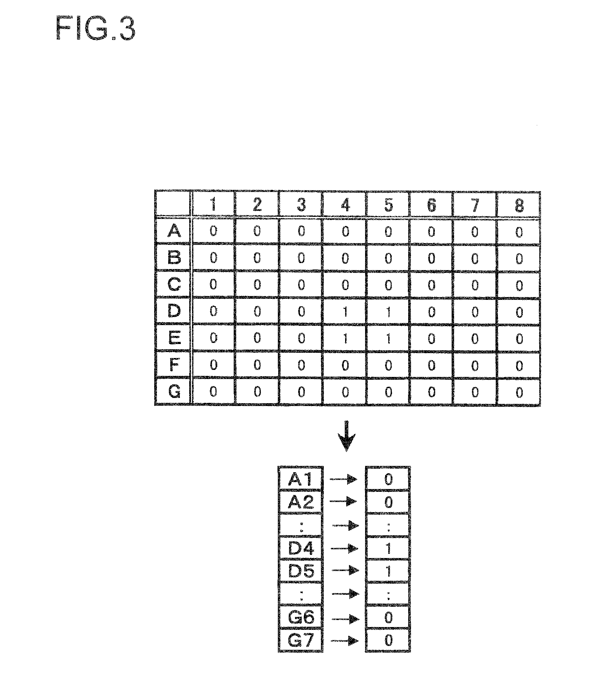

Next, referring to Fig. 3, the following describes theft-prone area data stored in the incident-prone area storage portion 15.

As the theft-prone area data, whether or not an area on each of the blocks of mesh data stored in the map storage portion 14 is a theft-prone area is present and stored in the incident-prone area storage portion 15. As shown in Fig. 3, with respect to each of all the blocks of mesh data stored in the map storage portion 14, whether or not the area thereon is a theft-prone area is set, and as described above, each of the blocks of mesh data is identified by an alphabetical character combined with a numeral.

In Fig. 3, among the blocks of mesh data., any block corresponding to a theft-prone area is assigned (1) ((D4), (D5), (E4), and (E5)), and any other block corresponding to a non-theft-prone area is assigned (0). With this setting made, if it is detected that the location at which a vehicle is stopped corresponds to road data or facility data contained in a block of mesh data assigned (1) as a theft-prone area, a warning is given.

The above-described working example describes a case where, as the data on theft-prone areas, with respect to each of the blocks of mesh data, whether or not an area thereon is a theft-prone area is set. This setting as to a theft-prone area, however, can also be made in administrative units instead of in units of blocks of mesh data.

Moreover, the above-described setting can also be made in units of facilities such as hotels, restaurants, various types of entertainment facilities, and department stores or, in a case of urban cities, in units of buildings. Furthermore, a large-scale facility may have a plurality of parking lots, and in such a case, this setting may be made in units of parking lots within the premises of the facility.

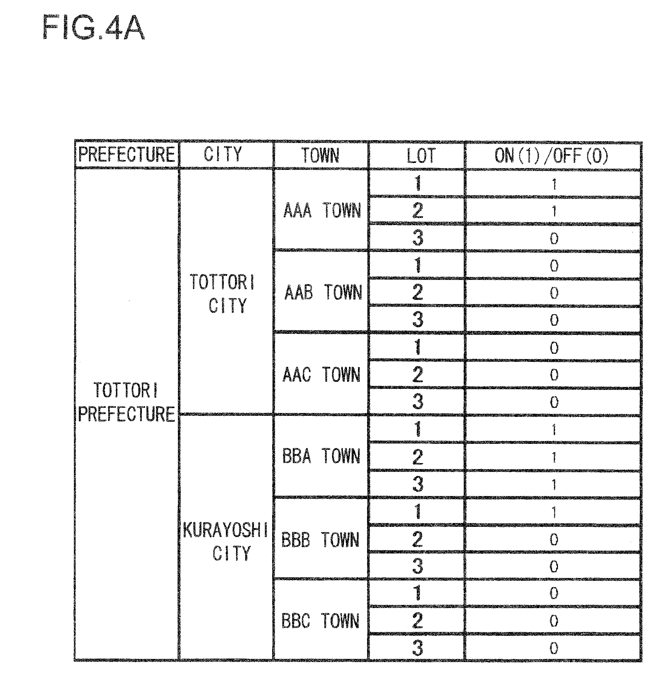

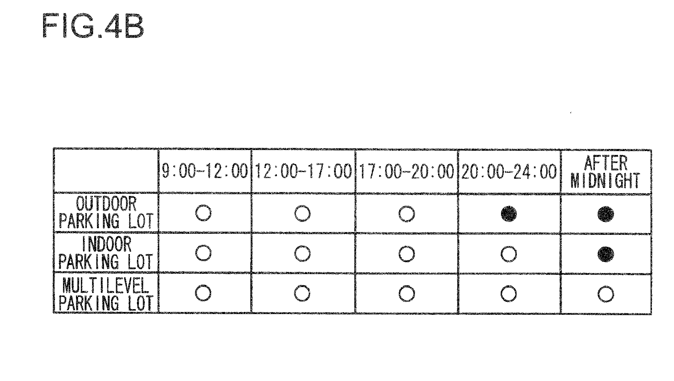

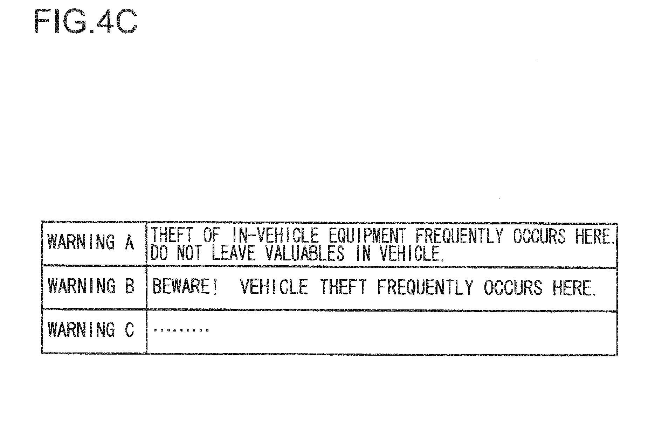

Figs. 4A and 4B each show one example of data stored in the incident-prone area storage portion 15, and Fig. 4C shows one example of data of warning messages stored therein.

Fig. 4A is a diagram showing data on theft-prone areas stored in administrative units, taking Tottori Prefecture as an example. The data is finely categorized by prefectures, cities, towns, down to lots, and whether or not each lot is a theft-prone area is set. In the figure, Lots 1 and 2, AAA Town, Tottori City are assigned (1) as theft-prorae areas. Furthermore, in addition thereto, Lots 1, 2, and 3, BBA Town, Kurashiki City and Lot 1, BBB Town, Kurashiki City are also assigned (1) as theft-prone areas. Areas other than these are assigned (0) as non-theft-prone areas.

In this working example, whether or not each lot is a theft-prone area is set. There is, however, no limitation thereto, and whether or not each city or each town is a theft-prone area may also be set.

Moreover, in the above-described example, each of the blocks of mesh data is assigned (0) or (1). Instead, a numerical value of the occurrence rate of theft (some numerical value representing the likelihood of occurrence of an incident such as, for example, the frequency of occurrence based on an average number of cases in which the incident occurs per week, per month, or per year or a relative occurrence rate obtained by normalizing this frequency using a national average value thereof is referred to bere as the occurrence rate) is set; an area having a numerical value thus set of the occurrence rate higher than a preset predetermined value is defined as a theft-prone area, and an area having a numerical value of the occurrence rate lower than the predetermined value is defined as a non-theft-prone area. In this case, a storage space is provided in part of the incident-prone area storage portion 15 or in part of the ROM storing the program, and by a manufacturer of the vehicle-mounted navigation apparatus, the predetermined value is preset in the storage space. The preset predetermined, value, however, may be made changeable as appropriate by the user via the input portion 12.

Moreover, either or both of the occurrence rate in each month or each season of a year and the occurrence rate in each time slot of a day may be set beforehand so that a set value corresponding to a month, season, or time slot in which the vehicle-mounted navigation apparatus is being used can be used.

As one example thereof, Fig. 4B shows data on how the occurrence rate of theft varies depending on a time slot in each of three types of parking lots different in structure. In the figure, an open circle indicates that the occurrence rate of theft is relatively low, and a sold circle indicates that the occurrence rate of theft is relatively high. In practice, however, it is preferable that a value of the occurrence rate be set beforehand as described above, and in that case, for example, the occurrence rate is defined to be relatively high (solid circle in the figure) if a value thereof is higher than a pre-determined value and to be relatively low (open circle in the figure) if the value thereof is lower than the pre-determined value.

Furthermore, there are various types of vehicle-related incidents, and it is preferable that an appropriate warning be issued so as to be suitable for each of them. Fig. 4C shows one example of data of warning messages, and as shown therein, a plurality of types of warning messages, which are associated with warning message numbers A, B, C, ..., are stored in the incident-prone area storage portion 15. In this case, in each of storage positions shown in Fig. 4B, in addition to a value of the occurrence rate of theft, a warning message number corresponding to the type of the theft is also stored.

### Working Example 1

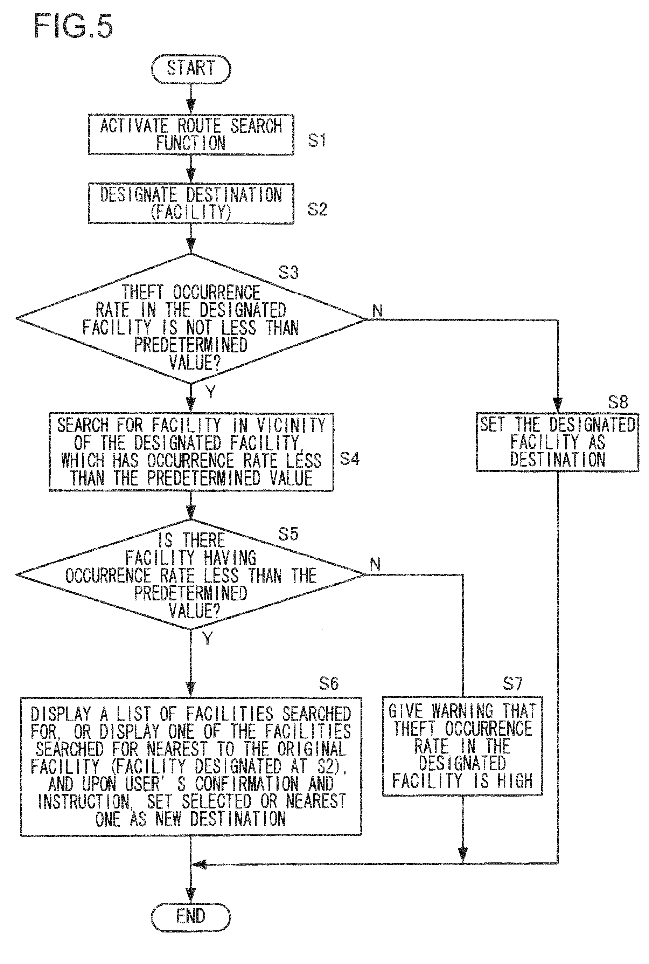

Next, referring to the flow chart of Fig. 5, the following describes a control operation of the control portion 10 in the vehicle-mounted navigation apparatus of the present invention.

This flow chart is described using as an example a case of using data on areas prone to theft of a vehicle or the vehicle-mounted navigation apparatus.

Moreover, the description of this flow chart is based not on an example in which the occurrence rate of theft in each area is stored but on an example in which the occurrence rate of theft in each facility within each area is stored.

A route search function of the vehicle-mounted navigation apparatus is activated (step 1), and once a destination (generally, a facility such as a house, a storm, or a building) is designated via the input portion 12 (step 2), a comparison is made between theft-prone area data stored in the incident-prone area storage portion 1 5 and the destination designated in stop 2, and based on a result thereof, it is judged whether or not the occurrence rate of theft in the destination is not less than a predetermined value (stop 3).

In this case, a storage space is provided in part of the incident-prone area storage portion 15 or in part of the ROM storing the program, and by a manufacturer of the vehicle-mounted navigation apparatus, the above-described predetermined value is preset in the storage space. The above-described predetermined value, however, may be made changeable as appropriate by the user via the input portion 12.

If, in the processing step at step S3, it is judged that the occurrence rate of theft at the destination is not less than the predetermined value (Y at step 3), a search is made for another facility of the same type near the destination, which has a value of the occurrence rate of theft less than the predetermined value (step 4), and if there is such a facility (Y at step 5), the facility is displayed in the display portion 13 (step 6). If there are a plurality of such facilities, the facilities are displayed in the form of a list for the user to select from, or one of the facilities nearest to the destination designated at step 2 is displayed for the user's confirmation, and resetting is performed to set a selected one or the nearest one of the facilities as a new destination.

If there is no such facility in the neighborhood (N at step 5), an indication that the designated destination is a facility having a high occurrence rate of theft is displayed, and, for example, a warning such as "This facility is prone to theft. Designate another facility." or "This facility is prone to theft. Remove the vehicle-mounted navigation apparatus whenever you leave the vehicle" is displayed in the display portion 13, or this warning is given in the form of a sound warning in the sound indication portion 17 (step 7).

Furthermore, regarding the warning about theft of the vehicle and the warning about theft of the vehicle-mounted navigation apparatus described in this example, needless to say, the warning about theft of the vehicle is given using data on areas prone to theft of a vehicle, and the warning about theft of the vehicle-mounted navigation, apparatus is given using data on theft of a vehicle-mounted navigation apparatus.

### Working Example 2

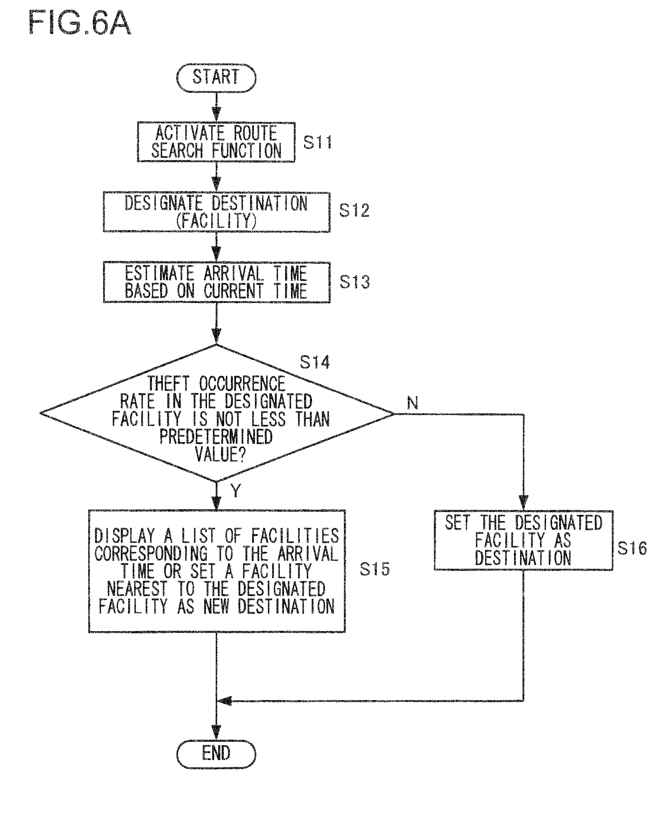

Working Example 1 is directed to a case where the occurrence rate of theft at a destination is constant regardless of a time slot. The occurrence rate, however, may vary, for example, between daytime and nighttime. Referring to the flow chart of Fig. 6A, Working Example 2 describes an example of a case where data on the occurrence rate in each time slot as shown in Fig. 4B is stored in the incident-prone area storage portion, 15.

In Fig. 6A, processing steps at steps 11 to 12 are the same as those at steps to 2 in Fig. 5, respectively. An arrival time is estimated by obtaining a current time and by adding to the current time, a length of time required to follow a route searched for using the route search function (step 13). If, based on the data shown in Fig. 4B, the occurrence rate of theft in a designated destination facility at the arrival time (or in a time slot after a lapse of a predetermined length of time from the arrival time) is not less than a predetermined value (Y at step 14), neighboring facilities of the same type as the originally designated destination, which have a low occurrence rate of theft, are displayed in the form of a list for the user to select a desired one from, or one of those facilities nearest to the originally designated facility is displayed as an alternative destination for the user's confirmation, and resetting is performed to set the selected one or the nearest one of the facilities as a new destination (step 15). If the search for an alternative destination cannot be achieved, an indication that the occurrence rate of theft in the designated facility is high is displayed in the display portion 13.

For example, in a case where a destination is a relatively large facility such as a large shopping center or an amusement park, there may be a plurality of parking lots in each of which the occurrence rate of theft varies depending on a time slot as shown in Fig. 4B. In such a case, if an originally designated destination is an outdoor parking lot and an estimated time of arrival at the destination is, for example, later than 19:30, a warning that theft may possibly occur from 20:00 onward is indicated; or alternatively, an indoor parking lot and a multilevel parking lot are displayed as alternative destinations in order for the user to select either of them, or either of them nearer to the originally designated outdoor parking lot is displayed as an alternative destination, in order for the user to change the destination to the nearer one and confirm it, and resetting is performed to set the selected one or the nearer one of them as a new destination, after which the processing proceeds to a route search.

Furthermore, a configuration can also be adopted in which if, at an estimated time of arrival at a destination (or in a time slot after a lapse of a predetermined length of time from the arrival time), the occurrence rate of theft in the designated destination facility is not less than a predetermined value, it is determined whether or not a warning should be indicated depending on the type of the facility as the destination. To be more specific, if a stay in the facility as the destination is unlikely to be prolonged as in a convenience store, a warning is not given, and if a stay in the facility is likely to be prolonged as in a shopping center, a warning is indicated. In this case, information on whether or not a stay in the facility is likely to be prolonged is pre-stored in the map storage portion 14 or in the incident-prone area storage portion 15.

If the occurrence rate of theft at the designated destination is less than the predetermined value (N at step 14), this destination is set, after which the processing proceeds to a route search (step 16).

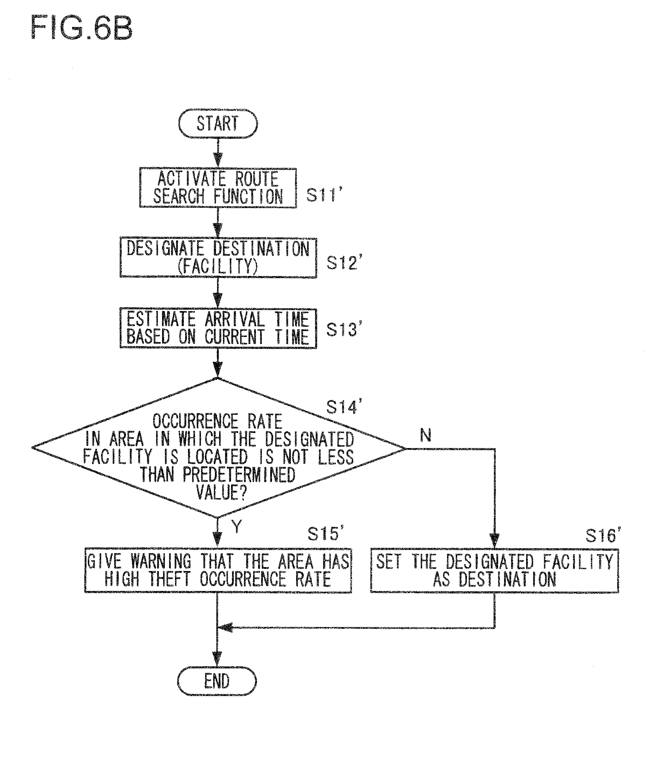

Furthermore, referring to the flow chart of Fig. 6B, the following describes a modification example of the processing in Fig. 6A. In the following description, it is assumed that data on the occurrence rate in each area in each of a plurality of time slots is stored in the incident-prone area storage portion 15.

Processing steps at steps 11' to 13' are the same as corresponding steps in Fig. 6A, respectively. Thereafter, at step 14', if, based on the data stored in the incident-prone area storage portion, 15, the occurrence rate of theft in an area in which a designated destination facility is located at an arrival time (or in a time slot after a a lapse of a predetermined length of time from the arrival time) is not less than a predetermined value (Y at step 14'), an indication that the occurrence rate of theft in the area in which the destination facility is located is high is displayed in the display portion 13 (step 15').

Furthermore, if the occurrence rate of theft in the area in which the designated destination is located is less than the predetermined value (N at step 14'), this destination is set, after which the processing proceeds to a route search (step 16').

A configuration may also be adopted in which if, at an arrival time (or in a time slot after a lapse of a predetermined length of time from the arrival time), the occurrence rate of theft in an area in which a designated destination facility is located is not less than a predetermined value, and if a stay in the facility as the destination is likely to be prolonged, a warning is indicated, while if not, a warning is not indicated. Working Example 3

There are various types of vehicle-related incidents, and warning modes respectively suitable therefor are thinkable. For example, theft is classified into theft of a vehicle itself and theft of in-vehicle equipment such as a vehicle-mounted navigation apparatus or goods loaded on a vehicle (a so-called vehicle break-in), and it is preferable that a warning be given so as to be suitable for each of these types of theft.

With respect to theft of a vehicle, possible warnings include, for example, "Beware! Vehicle theft frequently occurs here.", and with respect to a vehicle break-in, possible warnings include, for example, "Theft of in-vehicle equipment frequently occurs here. Do not leave valuables in vehicle."

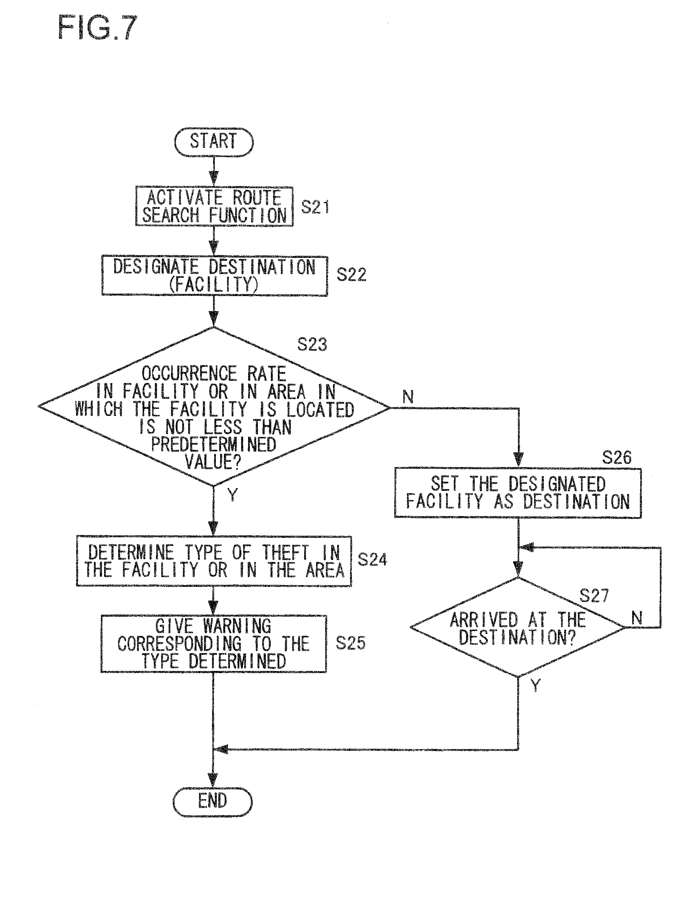

Fig. 7 shows a flow chart regarding this working example, in which processing steps at steps 21 to 22 are the same as processing steps at steps 1 to 2 in Fig. 5, respectively. If the occurrence rate of theft in a designated destination facility or in an area in which the designation facility is located is not less than a predetermined value (Y at step 23), a warning number corresponding to the type of thoft that occurs in the destination facility or in the area in which the destination, facility is located is determined (step 24), and a warning message corresponding to the number is taken out from the database shown in Fig. 4C to be displayed in the display portion 13, or this warning message is given in the form of a sound warning in the sound indication portion 17 (step 25).

Furthermore, with respect to tampering such as cutting a tire or scratching away paint, possible warnings include "Beware! Tampering with tire or paint frequently occurs here." Moreover, for locations prone to flooding caused by a downpour or a typhoon, a warning such as "beware! Flooding may occur in heavy rain." could be given. This can also be applied similarity to various types of other disasters represented by, for examples, a location highly likely to be hit by a falling object blown by a strong wind, a location assumed to be damaged by a landside caused by an earthquake, and so on.

### Working Example 4

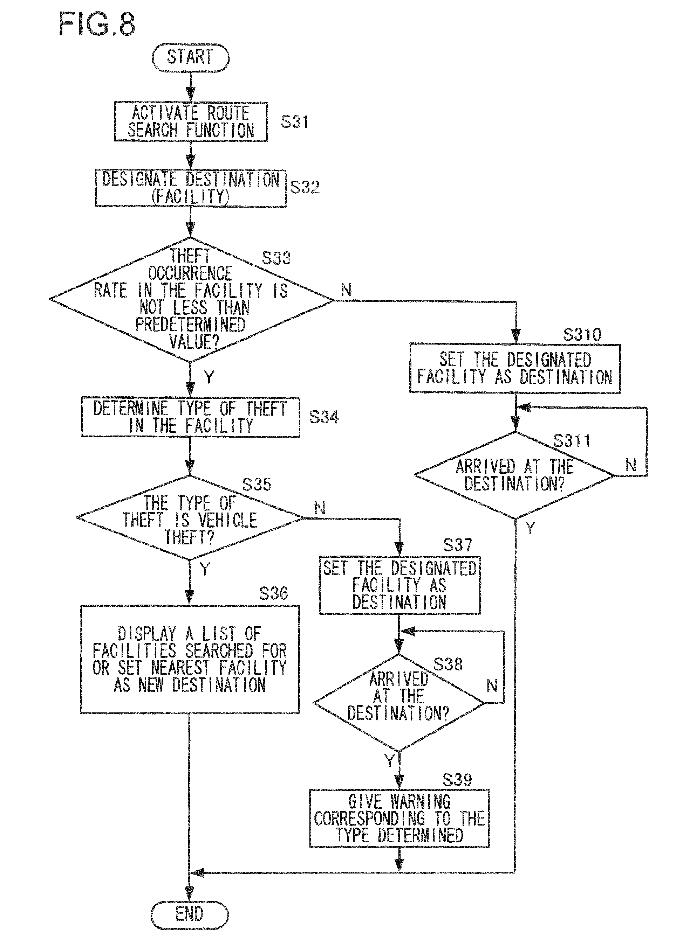

Fig. 8 shows a modification example of the working example in Fig. 7, in which processing steps at steps 31 to 34, 310, and 311 are the same as processing steps at steps 21 to 24, 26, and 27 in Fag. 7, respectively. If the type of theft is theft of a vehicle itself (Y at step 35), a search is made for another facility of the same type near a designated destination, which has a value of the occurrence rate of theft less than a predetermined value, and neighboring facilities searched for are displayed in the form of a list for the user to select from, or one of the neighboring facilities searched for nearest to the original facility (facility designated at S32) is presented for the user' s confirmation. Then, resetting is performed to set a selected one or the nearest one of the facilities as a new destination (step 36), after which a search for a route to the new destination is executed,

On the other hand, if the type of theft is a vehicle break-in (N at step 35), a route search is executed with the designated facility set as a destination (step 37). Then, route guiding is started, and after waiting till arrival at the destination (a loop at step 38), a predetermined warning is given to the user at the time of the arrival (step 39).

As discussed in detail in the foregoing, according to the vehicle-mounted electronic device of the present invention, it is judged whether or not a warning should be indicated based on a comparison of the occurrence rate of an incident with a predetermined value. Thus, through changing the predetermined value, it is possible to change the range of the occurrence rate of the incident and frequency at which the warning should be indicated.

As noted earlier, the present invention is not limited to the vehicle-mounted navigation apparatus described in each of the working examples and is applicable also to other types of electronic devices having data on incident-prone areas, a portion for inputting a destination, and a warning function.

### Industrial Applicability

The present invention is applicable to various types of vehicle-mounted electronic devices including a vehicle-mounted navigation apparatus.

### List of Reference Signs

- 10: Control portion
- 11: Current location detection portion
- 12: input portion
- 13: Display portion
- 14: Map storage portion
- 15: Incident-prone area storage portion
- 16: Communication portion
- 17: Sound indication portion

## Claims

1. A vehicle-mounted electronic device, comprising:
an input portion for designating a destination;
an incident-prone area storage portion in which incident-prone area data is stored;
an indication portion; and
a control portion,
wherein the incident-prone area storage portion stores an incident occurrence rate in each area in or a plurality of time slots or the incident occurrence rate in each facility within each area in each of the plurality of time slots, and
the control portion calculates a predicted time of arrival at the destination designated, and upon detecting that, in a time slot after a lapse of a predetermined length of time from the calculated predicted time, the incident occurrence rate in an area in which the destination is located or the incident occurrence rate at the destination is not less than a preset predetermined value, the control portion makes the indication portion provide an indication.

2. The vehicle-mounted electronic device according to claim 1, wherein
if the control portion detects that the incident occurrence rate in the area in which the destination is located or the incident occurrence rate at the destination is not less than the predetermined value, and if a stay in a facility as the destination is predicted to be prolonged, the control portion makes the indication portion provide an indication.

3. The vehicle-mounted electronic device according to claim 1, wherein
if the incident occurrence rate at the destination is not less than the predetermined value, the control portion searches for, as an alternative destination, a facility of the same type in a vicinity of the designated destination, which has a value of the incident occurrence rate in the time slot less than the predetermined value.

4. The vehicle-mounted electronic device According to claim 3, wherein
if an appropriate facility as the alternative destination is found, the control portion makes the indication portion provide guidance to the alternative destination, and if an appropriate facility as the alternative destination is not found, the control portion makes the indication portion indicate a warning to watch out.

5. The vehicle-mounted electronic device according to claim 1, therein
the preset predetermined, value is made changeable to an arbitrary value via the input portion.
